# EUROPEAN PATENT SPECIFICATION

(11) **EP 4 439 696 B1**
(45) Date of publication and mention of the grant of the patent: **28.01.2026**
(21) Application number: 23746430.0
(22) Date of filing: 29.01.2023
(51) Int. Cl.: H01M 4/13, H01M 4/139, H01M 4/04

(54) **ELECTRODE PLATE AND PREPARATION METHOD THEREFOR, AND BATTERY AND ELECTRIC APPARATUS**
ELEKTRODENPLATTE UND HERSTELLUNGSVERFAHREN DAFÜR SOWIE BATTERIE UND ELEKTRISCHE VORRICHTUNG
PLAQUE D'ÉLECTRODE ET SON PROCÉDÉ DE PRÉPARATION, ET BATTERIE ET APPAREIL ÉLECTRIQUE

(30) Priority: 29.01.2022 CN 202210112019
(43) Date of publication of application: 02.10.2024
(73) Proprietor: Zhuhai CosMX Battery Co., Ltd., Zhuhai, Guangdong 519180 (CN)
(72) Inventor: HUANG, Xue, Zhuhai, Guangdong 519180 (CN); LI, Tao, Zhuhai, Guangdong 519180 (CN); FU, Xiaohu, Zhuhai, Guangdong 519180 (CN)
(74) Representative: PPR AG
(86) International application number: PCT/CN2023/073661
(87) International publication number: WO 2023/143553

(56) References cited:
- EP-A1- 4 333 100
- CN-A- 108 311 335
- CN-A- 112 713 259
- CN-A- 112 802 992
- CN-A- 112 802 992
- CN-A- 113 644 230
- CN-A- 114 284 469
- JP-A- 2018 107 030
- US-A1- 2023 143 216

## Description

### TECHNICAL FIELD

The present application relates to the technical field of energy storage, and in particular, to an electrode piece and preparation method thereof, and battery and electric apparatus.

### BACKGROUND

Battery is a device for converting chemical energy into electric energy, and is widely used in new energy vehicles, energy storage power stations and other fields. The battery usually includes a shell, and an electrode assembly and an electrolyte arranged within the shell, the electrode assembly includes a separator and electrode pieces oppositely arranged on both sides of the separator, and polarity of the two electrode pieces are opposite, and a tab groove is arranged on the electrode pieces for welding the tab, thereby realizing the charge and discharge function of the battery through the tab.

In related technologies, when preparing an electrode piece, it is usually to make a larger-sized electrode-piece motherboard first, form several tab grooves arranged at intervals on the electrode-piece motherboard, and then cut the electrode-piece motherboard along an edge of the tab groove in a length direction of the tab groove to form a plurality of independent electrode pieces. However, due to a limitation of cutting mechanical errors in a cutting process, there is a remaining active layer between the edge of the tab groove and its adjacent edge. Therefore, the remaining active layer usually needs to be removed, but in a process of removal, burrs will be formed on the electrode pieces or the electrode pieces will be broken, affecting use performances of the battery.

EP 4333100A1 is prior art according to Art. 54(3) EPC and discloses an electrode plate and a battery, the electrode plate includes a current collector and an active material layer, the current collector includes a first segment, a first segment, and a first coating area, a second coating area and a slot area are distributed on at least one side of the first segment; the second coating area includes a transition area, and along a width direction of the current collector, the transition area is located between the slot area and an edge of the current collector; and the active material layer is attached to a surface of the current collector in the first coating area and the second coating area, and a thickness of the active material layer in the second coating area is less than a thickness of the active material layer in the first coating area. This application is used for at least solving technical problems of easy breakage of an electrode plate.

CN 112802992A discloses an electrode sheet and a lithium-ion battery. The electrode sheet includes a current collector, and a first active layer and a second active layer which are sequentially stacked on a surface of the current collector; where, the first active layer is provided with a first groove, the second active layer is provided with a second groove, and a vertical projection of the second groove on the current collector covers a vertical projection of the first groove on the current collector; a tab is disposed at the first groove and is electrically connected with the current collector. The electrode sheet effectively improves the charging risk at a tab connection position and increases the cycle retention rate of the lithium-ion battery under the condition of maintaining high-rate charging.

CN 113644230A discloses a battery electrode sheet, a battery and a manufacturing method for the battery electrode sheet. The battery electrode sheet includes an electrode sheet body and an electrode tab. The electrode sheet body has an electrode tab installation groove and a first groove. The electrode tab installation groove is connected with a first edge of the electrode sheet body, and the first groove is connected with a second edge of the electrode sheet body. The first edge and the second edge are the two opposite edges on the electrode sheet body. The electrode tab is connected in the electrode tab installation groove. The battery electrode sheet is less prone to breakage and has higher reliability of the battery.

### SUMMARY

The present application provides an electrode piece and preparation method thereof, and battery and electric apparatus to solve the technical problem of forming burrs on the electrode piece or causing the electrode piece to break when removing the remaining active layer. The present invention is set out in the appended set of claims.

A first aspect of embodiments of the present application provides an electrode piece, including a current collector and an active layer arranged on a surface of the current collector;
the active layer is provided with a first groove and a second groove, and a groove bottom of the second groove is higher than a groove bottom of the first groove, and is lower than a surface of the active layer that faces away from the current collector;
the electrode piece has a first side edge and a second side edge that are arranged opposite each other along a first direction, and one side edge of the groove bottom of the second groove is flush with at least one of the first side edge and the second side edge and is located on at least one side of the first groove along the first direction.

In an optional embodiment, the groove bottom of the first groove exposes a surface of the current collector.

In an optional embodiment, one side edge of the groove bottom of the second groove is flush with the first side edge, and the second groove is located between the first groove and the first side edge;
where the first groove is communicated with the second groove.

In an optional embodiment, one side edge of the groove bottom of the second groove is flush with the second side edge, and the second groove is located between the first groove and the second side edge.

In an optional embodiment, an active layer is arranged between the first groove and the second groove.

In an optional embodiment, the second groove comprises a first sub-groove and a second sub-groove;
the first sub-groove is located between the first groove and the first side edge, and is communicated with the first groove;
the second sub-groove is located between the first groove and the second side edge, and the second sub-groove and the first groove are provided with an active layer.

In an optional embodiment, a length L1 of the first groove is 10 mm-40 mm along the first direction;
a width W of the first groove is 9 mm-40 mm along a second direction.

In an optional embodiment, a length L2 of the second groove is 1 mm-5 mm along the first direction.

In an optional embodiment, a sum of a length of the first sub-groove and a length of the second sub-groove is 1 mm-5 mm along the first direction.

In an optional embodiment, the electrode piece further includes a tab, and a welding area between the tab and the current collector is located within the first groove, and an end of the tab extends out of the electrode piece along the first direction.

Along a thickness direction of the electrode piece, the electrode piece and the tab have a first surface and a second surface, which are arranged opposite each other, and the first surface of the tab contacts the groove bottom of the first groove;
a height difference D1 between a second surface of the tab and a second surface of the electrode piece is 20 µm-100 µm.

In an optional embodiment, two surfaces of the current collector arranged opposite each other both are provided with the active layer, where the active layer located on one surface is a first active layer, the active layer located on the other surface is a second active layer, and the first active layer and the second active layer both are provided with a first groove and a second groove;
a length of the first groove on the first active layer is greater than a length of the first groove on the second active layer; and/or
a width of the first groove on the first active layer is greater than a width of the first groove on the second active layer; and/or
a length of the second groove on the first active layer is greater than a length of the second groove on the second active layer; and/or
a width of the second groove on the first active layer is greater than a width of the second groove on the second active layer.

A second aspect of embodiments of the present application provides a battery, including a shell and a battery cell arranged within the shell, the battery cell including the electrode piece as described above.

A third aspect of embodiments of the present application provides an electric apparatus, including a battery as described above.

A fourth aspect of embodiments of the present application provides a method for preparing an electrode piece, including following steps:
providing an electrode-piece motherboard;
forming a plurality of grooves arranged at intervals on the electrode-piece motherboard, where each groove includes a first initial groove and a second initial groove intercommunicated with the first initial groove, and a groove bottom of the first initial groove exposes a current collector of the electrode-piece motherboard, a depth of the second initial groove is less than a depth of the first initial groove;
forming a plurality of cutting parts arranged at intervals on the electrode-piece motherboard, where the cutting part extends along a second direction, and the cutting part coincides with one side edge of the second initial groove along the first direction, or the cutting part is located between two side edges of the second initial groove along the first direction;
cutting the electrode-piece motherboard along the cutting parts to form a plurality of electrode pieces, each electrode piece including a first groove and a second groove, where when the cutting parts coincide with one side edge of the second initial groove along the first direction, each first initial groove forms one first groove and each second initial groove forms one second groove, or, when the cutting parts are located between two side edges of the second initial groove along the first direction, each first initial groove forms one first groove, and the second groove is formed by parts of two second initial grooves.

In the electrode piece and the preparation method thereof, and battery and electric apparatus provided in the present application, by forming a second groove on the electrode piece and the depth of the second groove being less than the depth of the first groove, on the premise of ensuring that the active layer located between the groove bottom of the first groove and the groove bottom of the second groove does not affect thickness uniformity of the electrode piece, it is not necessary to use the cutting process to remove the active layer between the groove bottom of the first groove and the groove bottom of the second groove as in the relevant technology. By means of such arrangement, on one hand, burrs can be prevented from being formed on the electrode piece to avoid the burrs from puncturing a separator of a battery, thereby reducing the risk of the occurrence of a short circuit in the battery, and improving the safety performance of the battery; and on the other hand, the electrode piece can be prevented from being broken, thereby increasing the yield of the electrode piece, and thus increasing the yield of the battery.

### BRIEF DESCRIPTION OF DRAWINGS

The accompanying drawings herein, which are incorporated into the specification and form part of the specification, show embodiments that comply with the present application, and are used to explain the principles of the present application together with the specification.
FIG. 1 is a schematic structural diagram of part of a battery provided by an embodiment of the present application.
FIG. 2 is a schematic structural diagram I of an electrode piece provided by an embodiment of the present application.
FIG. 3 is a sectional view taken along a direction of A-A in FIG. 2.
FIG. 4 is a schematic structural diagram II of an electrode piece provided by an embodiment of the present application.
FIG. 5 is a sectional view taken along a direction of B-B in FIG. 4.
FIG. 6 is a schematic structural diagram III of an electrode piece provided by an embodiment of the present application.
FIG. 7 is a sectional view taken along a direction of C-C in FIG. 6.
FIG. 8 is a schematic structural diagram I of an electrode piece and a tab provided by an embodiment of the present application.
FIG. 9 is a schematic structural diagram II of an electrode piece and a tab provided by an embodiment of the present application.
FIG. 10 is a schematic structural diagram III of an electrode piece and a tab provided by an embodiment of the present application.
FIG. 11 is a sectional view of an electrode piece and a tab provided by an embodiment of the present application.
FIG. 12 is a process flow chart of a preparation method of an electrode piece provided by an embodiment of the present application.
FIG. 13 is a schematic structural diagram of an electrode-piece motherboard in a preparation method of an electrode piece provided by an embodiment of the present application.
FIG. 14 is a schematic structural diagram of forming a groove in a preparation method of an electrode piece provided by an embodiment of the present application.
FIG. 15 is a sectional view I taken along a direction D-D in FIG. 14.
FIG. 16 is a sectional view II taken along a direction D-D in FIG. 14.

Description of reference signs:
100: electrode piece;
110: current collector; 111: first side edge; 112: second side edge;
120: active layer; 121: first groove; 122: second groove; 1221: first sub-groove;
1222: second sub-groove;
130: tab;
140: insulating film;
200: battery cell; 210: separator;
300: electrode-piece motherboard; 310: first cleaned zone; 320: second cleaned zone; 330: first initial groove; 340: second initial groove; 350: cutting part.

Definite embodiments of the present application have been shown through the above accompanying drawings, which will be described in more detail hereinafter. These accompanying drawings and written descriptions are not intended to limit the scope of the concept of the present application in any way, but to illustrate the concept of the present application for those skilled in the art with reference to specific embodiments.

### DESCRIPTION OF EMBODIMENTS

As described in the background, problems existed in the related technologies, such as burrs are easy to be formed on the electrode piece or the electrode piece may be broken. The inventor found that the reason for the problems is that the process of preparing the electrode piece usually is providing an electrode-piece motherboard with a tab groove first, and then cutting by a die cutting mechanism the electrode-piece motherboard into several electrode pieces, where before cutting the electrode-piece motherboard, the electrode-piece motherboard needs to be rolled to increase the density of the electrode piece motherboard, but in the process of rolling, it will cause the size of the electrode-piece motherboard to be fine-adjusted, which will make it difficult to cut along the edge of the tab groove in the length direction during cutting process due to a mechanical error, and then lead to a remaining active layer between the tab groove and its adjacent edge along the width direction of the electrode piece.

In order to ensure the thickness uniformity of the electrode piece after welding the tab, the above remaining active layer needs to be removed by a cutting tool. However, burrs will be formed on the electrode piece or the electrode piece will be broken during the cutting process. For example, when burrs are formed on the electrode piece, the burrs will easily puncture the separator of the battery, resulting in short circuit between adjacent electrode pieces of the battery, and reducing the safety performance of the battery; or for example, when the electrode piece is broken, it will reduce the yield of the electrode piece, and then reduce the yield of the battery.

In view of the above technical problems, the embodiments of the present application provide an electrode piece and preparation method thereof, and a battery and an electrical apparatus, where by forming a second groove on the electrode piece, and making a depth of the second groove less than a depth of a first groove, on the premise of ensuring that the active layer located between a groove bottom of the first groove and a groove bottom of the second groove does not affect thickness uniformity of the electrode piece, it is not necessary to use a cutting process to remove the active layer between the groove bottom of the first groove and the groove bottom of the second groove as in the relevant technology. By means of such arrangement, on one hand, burrs can be prevented from being formed on the electrode piece to avoid the burrs from puncturing the separator of the battery, thereby reducing the risk of the occurrence of the short circuit in the battery, and improving the safety performance of the battery; and on the other hand, the electrode piece can be prevented from being broken, thereby increasing the yield of the electrode piece, and thus increasing the yield of the battery

In order to make the above objects, features and advantages of the embodiments of the present application more obvious and understandable, the technical solutions in the embodiments of the present application will be clearly and completely described in combination with the accompanying drawings of the embodiments of the present application. Obviously, the embodiments described are only some of the embodiments of the present application and not all of them.

An embodiment of the present application provides an electric apparatus, including a battery for providing electrical energy for the electric apparatus. The electric apparatus in the embodiments of the present application may be a vehicle, for example, a fuel vehicle, a gas vehicle or a new energy vehicle. The new energy vehicle may be a pure electric vehicle, a hybrid vehicle or a range-extended vehicle and so on.

In addition, the apparatus can also be other energy storage apparatuses, such as mobile phones, portable devices, laptops, electric toys, power tools, ships and spacecraft, where the spacecraft can include aircraft, rockets, space shuttles or spaceship.

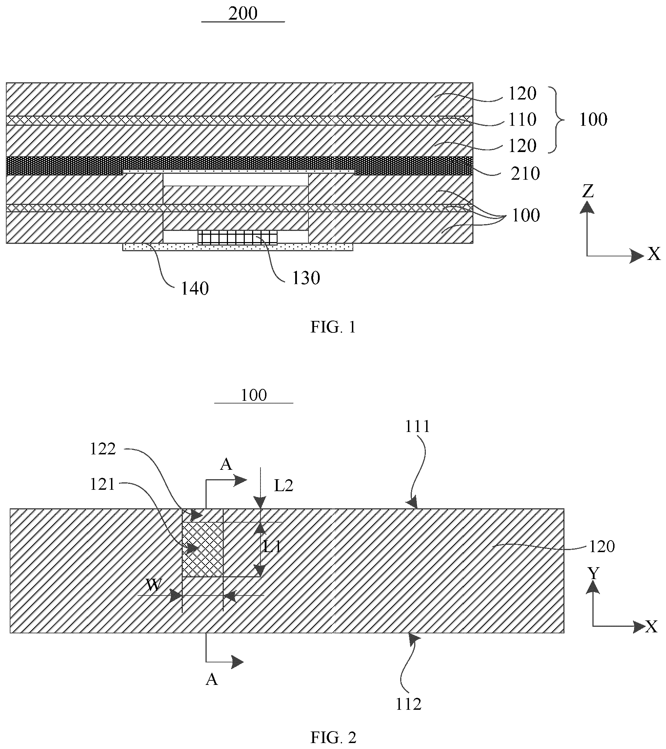

Where, as shown in FIG. 1, the battery may include a shell (not shown) and a battery cell 200 arranged within the shell, where the battery cell 200 may include a separator 210 and two electrode pieces 100, and the separator 210 is located between the two electrode pieces 100 and is used for realizing an insulation setting between the two electrode pieces 100, where a material of the separator 210 may be PP (Polypropylene) or PE (Polyethylene) or the like.

It should be noted that in the present embodiment, the two electrode pieces 100 have opposite polarity, where one electrode piece 100 is a positive electrode piece and the other electrode piece 100 is a negative electrode piece, and a metal ion (such as lithium ion) is used to move between the positive electrode piece and negative electrode piece to provide electric energy.

As shown in FIGs. 2 to 7, the electrode piece 100 includes a current collector 110 and an active layer 120, and the active layer 120 is arranged on a surface of the current collector 110. It should be noted that in the present embodiment, the electrode piece 100 may refer to a positive electrode piece or a negative electrode piece. When the electrode piece 100 is a positive electrode piece, a material of the current collector 110 may be aluminum and a material of the active layer 120 may be one of lithium cobaltate, lithium iron phosphate, ternary lithium and lithium manganate or a combination of more of the above; and when the electrode piece 100 is a negative electrode piece, the material of the current collector 110 is copper, and the material of the active layer 120 may be one of graphite, hard carbon, soft carbon, silicon, and silicon-based materials or a combination of more of the above.

The active layer 120 is arranged on a surface of the current collector 110, where the active layer 120 is provided with a first groove 121 and a second groove 122.

In one example, the active layer 120 may be arranged on one surface of the current collector 110, for example, the active layer 120 is arranged on an upper surface of the current collector 110, or the active layer 120 is arranged on a lower surface of the current collector 110.

In another example, two opposite surfaces of the current collector 110 are both provided with the active layer 120, where the active layer 120 located on one surface is a first active layer, the active layer 120 located on the other surface is a second active layer. That is, the number of the active layer 120 may be two, and the two active layers 120 may be arranged on two opposite surfaces of the current collector 110 along the thickness direction, i.e., one active layer 120 is arranged on an upper surface of the current collector 110 and the other active layer 120 is arranged on a lower surface of the current collector 110.

When two surfaces of the current collector 110 arranged opposite each other are both provided with the active layer, the first active layer and the second active layer are provided with the first groove 121 and the second groove 122.

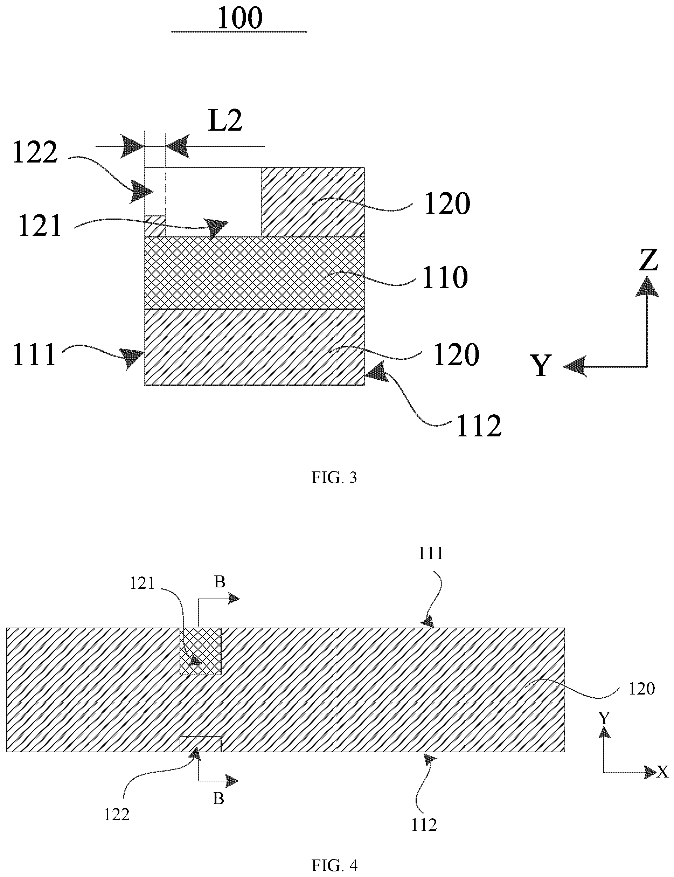

When the groove bottom of the second groove 122 is higher than the groove bottom of the first groove 121 and lower than a surface of the active layer 120 facing away from the current collector 110, taking an orientation shown in FIGs. 2 and 4 as an example, the groove bottom of the second groove 122 is located between the groove bottom of the first groove 121 and an upper surface of the active layer 120. Where the groove bottom of the first groove 121 may expose or may not expose the surface of the current collector 110. When the groove bottom of the first groove 121 does not expose the surface of the current collector 110, and when a tab is welded within the first groove 121, the first groove 121 needs to be reprocessed to increase the depth of the first groove 121 to expose the surface of the current collector 110.

Along the first direction, i.e., Y direction in FIG. 2, the electrode piece 100 has a first side edge 111 and a second side edge 112 that are arranged opposite each other, and one side edge of the groove bottom of the second groove 122 is flush with at least one of the first side edge 111 and the second side edge 112, and is located on at least one side of the first groove 121 along the first direction.

It should be noted that, taking the orientation shown in FIG. 2 as an example, the first side edge 111 can be understood as an upper side edge of the electrode piece 100, and the second side edge 112 can be understood as a lower side edge of the electrode piece 100.

In one example, as shown in FIGs. 2 and 3, along the first direction, one side edge of the groove bottom of the second groove 122 is flush with the first side edge 111, and is located between the first groove 121 and the first side edge 111. That is, an upper side edge of the groove bottom of the second groove 122 is flush with the first side edge 111.

Where the first groove 121 and the second groove 122 are intercommunicated, so that the tab can be arranged within the first groove 121 and extends through the second groove 122 to outside of the electrode piece 100.

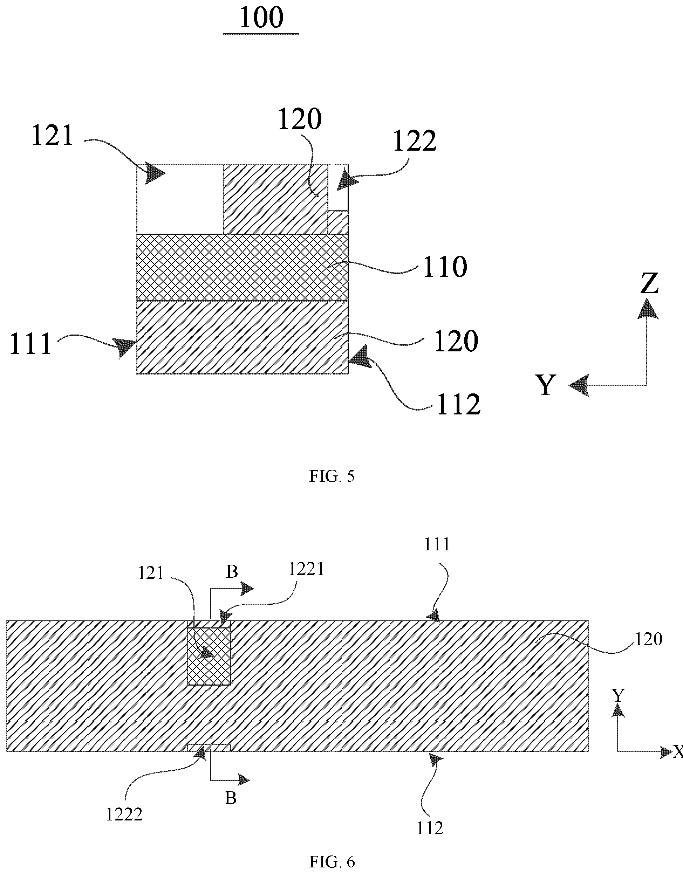

In another example, as shown in FIGs. 4 and 5, along the first direction, one side edge of the groove bottom of the second groove 122 is flush with the second side edge 112, and is located between the first groove 121 and the second side edge 112. That is, the lower side edge of the groove bottom of the second groove 122 is flush with the second side edge 112 of the electrode piece 100. In this way, subsequent tab can be arranged within the first groove 121, and one end of the tab facing away from the first groove 121 extends to outside of the electrode piece 100.

It should be noted that in the present embodiment, an active layer is arranged between the first groove 121 and the second groove 122, where a top surface of the active layer may be flush with a top surface of the first groove 121 or may be lower than the top surface of the first groove 121.

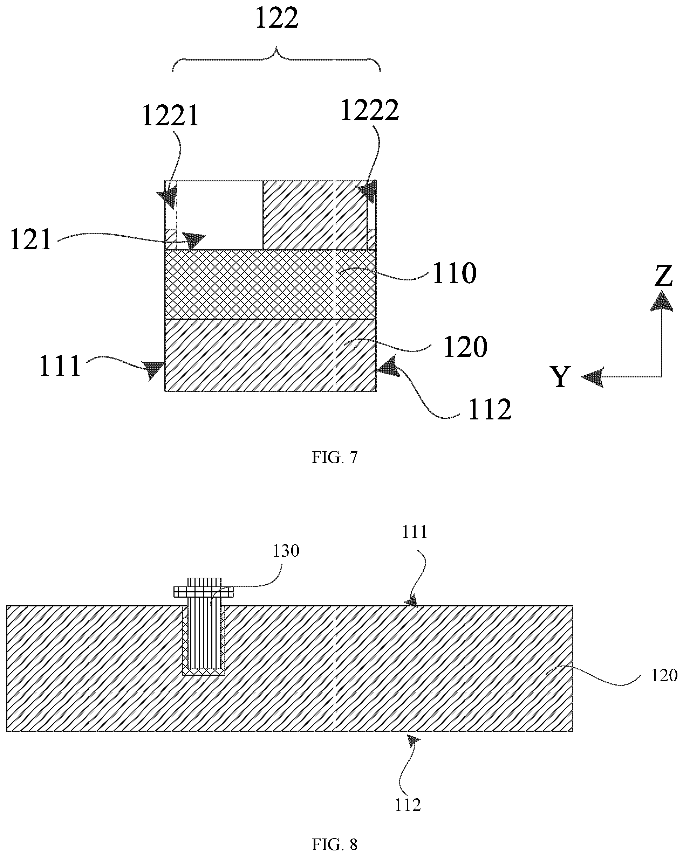

In another embodiment, as shown in FIGs. 6 and 7, the second groove 122 includes a first sub-groove 1221 and a second sub-groove 1222; the first sub-groove 1221 is located between the first groove 121 and the first side edge 111, and is communicated with the first groove 121; the second sub-groove 1222 is located between the first groove 121 and the second side edge 112, and the active layer is arranged between the second sub-groove 1222 and the first groove 121. In this way, the subsequently formed tab can be arranged within the first groove 121 and extends through the first sub-groove 1221 to outside the electrode piece 100.

The embodiment of the present application adopts a one-time cleaning process to form a first groove and a second groove on the electrode piece, and make the depth of the second groove less than the depth of the first groove, and then on the premise of ensuring that the active layer located between the groove bottom of the first groove and the groove bottom of the second groove does not affect the thickness uniformity of the electrode piece, it is not necessary to use a cutting process to remove the active layer between the groove bottom of the first groove and the groove bottom of the second groove as in the relevant technology. By means of such arrangement, on one hand, burrs can be prevented from being formed on the electrode piece to avoid the burrs from puncturing a separator of a battery, thereby reducing the risk of the occurrence of a short circuit in the battery and improving the safety performance of the battery; and on the other hand, the electrode piece can also be prevented from being broken, thereby increasing the yield of the electrode piece, and thus increasing the yield of the battery.

In addition, the first groove and the second groove in the embodiments of the present application are prepared by a single cleaning process, which avoids a secondary punching process compared with the related technologies, simplifies the preparation process of the electrode piece, and improves the efficiency of production of the electrode piece.

In some embodiments, when two surfaces of the current collector 110 arranged opposite each other are provided with the active layer, a length of the first groove 121 on the first active layer is greater than a length of the first groove 121 on the second active layer; and/or, a width of the first groove 121 on the first active layer is greater than a width of the first groove 121 on the second active layer; and/or, a length of the second groove 122 on the first active layer is greater than a length of the second groove 122 on the second active layer; and/or, a width of the second groove 122 on the first active layer is greater than a width of the second groove 122 on the second active layer.

In the present embodiment, by making a size of the first groove used to accommodate the tab larger than a size of the other first groove, it is convenient to weld the tab, and the thickness uniformity of the electrode piece can be ensured as much as possible.

In some embodiments, continuing to refer to FIGs. 2 and 3, along the first direction, the length L1 of the first groove 121 is 10 mm-40 mm; along the second direction, the width W of the first groove 121 is 9 mm-40 mm.

If the length and the width of the first groove 121 are too large, an area of the first groove 121 is too large, affecting energy density of the battery; if the length and the width of the first groove 121 are too small, the area of the first groove 121 is too small, increasing the difficulty of welding the tab, and then increasing the difficulty of preparing the electrode piece. Therefore, the length and the width of the first groove 121 are limited in the present embodiment to ensure the energy density of the battery and reduce the difficulty of preparing the electrode piece.

In some embodiments, along the first direction, the length L2 of the second groove 122 is 1 mm-5 mm.

If the length of the second groove 122 is less than 1 mm, this will increase the difficulty of preparing the electrode piece, and it is easy that there is still a remaining active layer on a formed electrode piece, and it is still requiring a secondary punching process. If the length of the second groove 122 is greater than 5 mm, this will increase a sum of the length of the first groove 121 and the length of the second groove 122, and then affects a length of the tab formed within the first groove 121, thus resulting in increase of the difficulty of preparation, and meanwhile reducing the thickness uniformity of the electrode piece.

Therefore, on the premise that the first groove and the second groove are formed on the electrode piece at the same time through the same cleaning process in the present embodiment, the length L2 of the second groove 122 is further defined, which can not only reduce the difficulty of preparing the electrode piece 100, but also improve the thickness uniformity of the electrode piece 100.

It should be noted that the structure of the second groove 122 is not limited to the above description. When the second groove 122 includes the first sub-groove 1221 and the second sub-groove 1222, a sum of a length of the first sub-groove 1221 and a length of the second sub-groove 1222 is 1 mm-5 mm, beneficial effects of which are the same as in the above embodiment, and will not be repeated in the present embodiment.

In addition, a dimensional relationship between the first groove 121 and the second groove 122 defined in the above embodiment can be understood as the dimensions of the first groove 121 and the second groove 122 for accommodating the tab, and correspondingly the dimensions of the first and second grooves not accommodating the tab may be smaller than the dimensions described above.

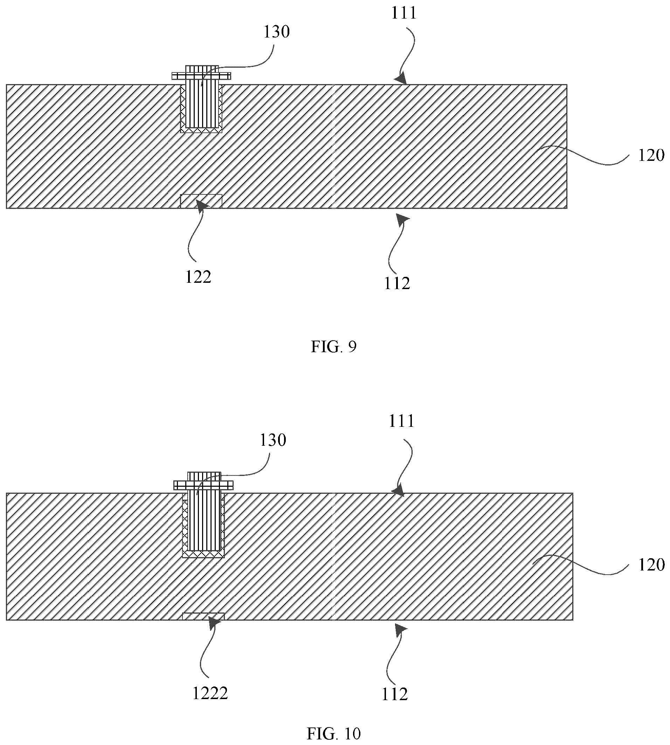

As shown in FIGs. 8 to 10, the electrode piece 100 further includes a tab 130, a welding area of the tab 130 to the current collector 110 is located within the first groove 121, that is, the part of the tab 130 is located within the first groove 121, where one end of the tab 130 extends to outside of the electrode piece 100 along the first direction, for connecting with a terminal on the shell.

It should be noted that the tab 130 in the present embodiment may be a separate structure from the current collector 110, or it may be formed by cutting the current collector 110. When the tab 130 is a separate structure from the current collector 110, the tab 130 may be connected with the current collector 110 by welding to realize the electrical connection between the tab 130 and the current collector 110.

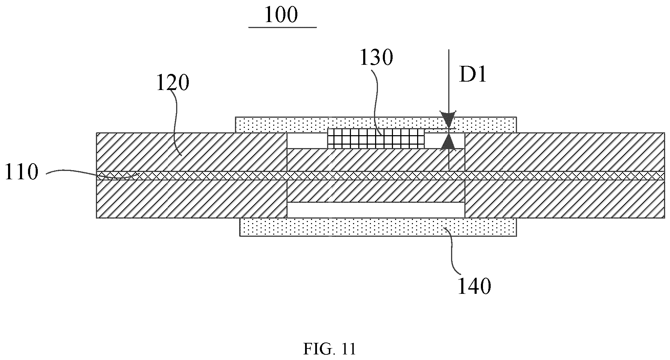

As shown in FIG. 11, along the thickness direction of the electrode piece 100, the electrode piece 100 and the tab 130 have a first surface and a second surface that arranged opposite each other, and the first surface of the tab 130 is in contact with the groove bottom of the first groove; a height difference D1 between the second surface of the tab 130 and the second surface of the electrode piece 100 is 20 µm-100 µm.

Taking an orientation shown in FIG. 11 as an example, the first surface of the electrode piece 100 is a lower surface of the electrode piece 100, and the second surface of the electrode piece 100 is an upper surface of the electrode piece 100.

After arranging the tab 130 within the first groove 121 and the second groove 122, or within the first groove 121, an upper surface of the tab 130 is higher than the upper surface of the electrode piece 100 by 20 µm-100 µm, and such a height difference D1 has little effect on the thickness uniformity of the electrode piece 100, which can ensure the use performance of the electrode piece 100.

In some embodiments, the electrode piece 100 may further includes an insulating film 140, which covers the first groove 121 and the second groove 122 and is used for protecting the tab 130 located within the first groove 121 and the second groove 122. Where, the insulating film 140 may include protective tape.

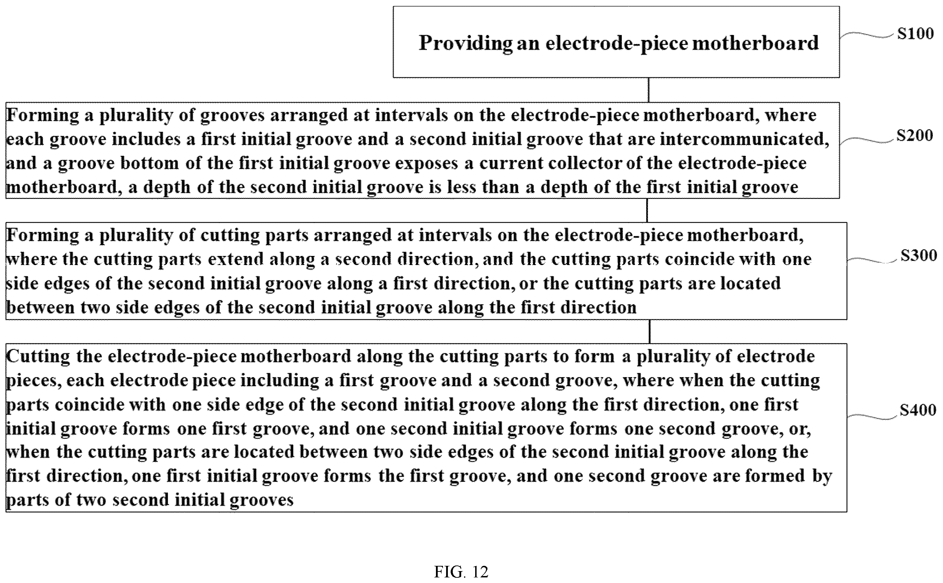

As shown in FIG. 12, an embodiment of the present application further provides a method for preparing an electrode piece, including steps as described below.

Step S100: providing an electrode-piece motherboard:
providing an electrode-piece motherboard 300 with an active layer and a current collector, where the electrode-piece motherboard 300 has a large size to facilitate subsequent formation of a plurality of electrode pieces by cutting.

Step S200: forming a plurality of grooves arranged at intervals on the electrode-piece motherboard, where each groove includes a first initial groove and a second initial groove that are intercommunicated, a groove bottom of the first initial groove exposes the current collector of the electrode-piece motherboard, and a depth of the second initial groove is less than a depth of the first initial groove.

In the present embodiment, a process of forming the grooves can be completed by a cleaning device, where the cleaning device includes: a frame, and a liquid injection head, a cleaning head, a servo motor, a winding roller, an unwinding roller, a cleaning platform, and a cleaned electrode piece, which are arranged on the frame; where, the winding roller is connected with the unwinding roller through the electrode-piece motherboard; the liquid injection head, the cleaning head, the winding roller and the unwinding roller are all on an output shaft of the servo motor, and the liquid injection head and the cleaning head are located on the electrode-piece motherboard located between the winding roller and the unwinding roller, so that the liquid injection head can inject a cleaning solvent into the electrode-piece motherboard 300; and the cleaning head is used to form a groove on the electrode-piece motherboard 300.

It should be noted that the connection relationship between various components of the cleaning device can refer to the structure in the relevant technology, and is not described in the present embodiment.

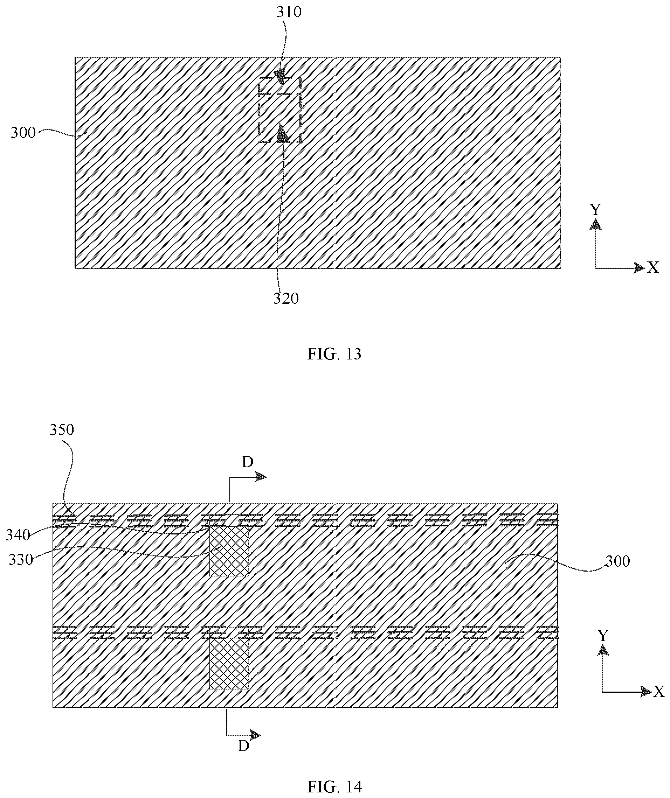

Exemplarily, as shown in FIG. 13, a first cleaned zone 310 and a second cleaned zone 320 that are interconnected are marked on the electrode-piece motherboard 300, where the first cleaned zone 310 and the second cleaned zone 320 are arranged along the first direction, and a center line of the first cleaned zone 310 is collinear with a center line of the second cleaned zone 320.

Where, an area of the first cleaned zone 310 is greater than an area of the second cleaned zone 320, and a proportional relationship between the first cleaned zone 310 and the second cleaned zone 320 can be adjusted according to an actual situation.

In addition, the first cleaned zone 310 and the second cleaned zone 320 can be used as a whole cleaned zone, and there are multiple cleaned zones, and the multiple cleaned zones are arranged at intervals along the first direction.

After that, using the cleaning solvent to infiltrate at least the first cleaned zone 310 and the second cleaned zone 320; exemplarily, an injection pump is used to accurately inject the cleaning solvent located in a storage tank into the liquid injection head, and the cleaning solvent is infiltrated onto the entire electrode-piece motherboard 300 through the liquid injection head, or only infiltrated on the first cleaned zone 310 and the second cleaned zone 320.

After the first cleaned zone 310 and the second cleaned zone 320 are fully infiltrated, the first cleaned zone 310 is cleaned by the cleaning device until the current collector of the electrode-piece motherboard 300 is exposed to form the first initial groove 330.

Exemplarily, after the first cleaned zone 310 and the second cleaned zone 320 are fully infiltrated, the servo motor of the cleaning device is controlled to work until the first cleaned zone 310 and the second cleaned zone 320 are moved to the cleaning head, and the electrode-piece motherboard 300 is adsorbed to the cleaning platform under a vacuum force, after which, the servo motor drives the cleaning head down and cleans the first cleaned zone 310 to form the first initial groove 330.

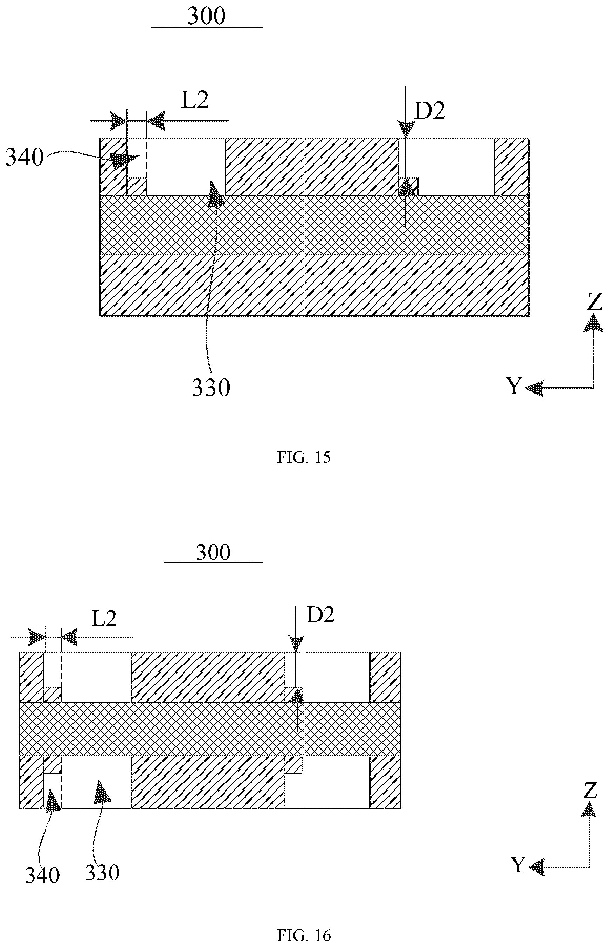

After the first initial groove 330 is formed, the second cleaned zone 320 is cleaned by the cleaning device to form the second initial groove 340 in the second cleaned zone 320. The distance D2 between the groove bottom of the second initial groove and the top surface of the electrode-piece motherboard is greater than half of the thickness of the active layer of the electrode-piece motherboard. The structures of the first and second initial grooves are shown in FIGs. 14 to 16, it should be noted that the steps for cleaning the second initial groove 340 are the same as those for cleaning the first initial groove 330 and will not be repeated in the present embodiment.

In the present embodiment, by defining that the distance D2 between the groove bottom of the second initial groove 340 and the top surface of the electrode-piece motherboard is greater than half of the thickness of the active layer of the electrode-piece motherboard, it is possible to ensure the thickness uniformity of the electrode piece is not affected by the active layer located between the groove bottom of the first groove and the groove bottom of the second groove, after the formation of the second groove 122.

Step S300: forming a plurality of cutting parts arranged at intervals on the electrode-piece motherboard, where the cutting parts extend along the second direction, and the cutting parts coincide with one side edge of the second initial groove along the first direction, or the cutting parts are located between two side edges of the second initial groove along the first direction.

As shown in FIG. 14, the cutting part 350 can be a cutting line extending along the length direction of the electrode-piece motherboard 300, or it can be a cutting groove extending along the length direction of the electrode-piece motherboard 300, where the length direction of the electrode-piece motherboard 300 is X direction in FIG. 14.

The cutting part 350 coincides with one side edge of the second initial groove 340 along the first direction, or the cutting part 350 is located between two side edges of the second initial groove 340 along the first direction. Taking an orientation shown in FIG. 14 as an example, the cutting part 350 may coincide with the upper side edge of the second initial groove 340, or with the lower side edge of the second initial groove 340, or the cutting part 350 may be located between the upper side edge and the lower side edge of the second initial groove 340.

By means of such arrangement, it may be ensured that the first groove or the second groove of the formed electrode piece 100 runs through the electrode piece along the first direction, and there is no need to carry out a second punching process of the electrode piece 100 as in related technologies, simplifying the preparation process of the electrode piece.

Step S400: cutting the electrode-piece motherboard along the cutting parts to form a plurality of electrode pieces, each electrode piece including the first groove and the second groove, where when the cutting parts coincide with one side edge of the second initial groove along the first direction, each first initial groove forms one first groove and each second initial groove forms one second groove, or, when the cutting parts are located between two side edges of the second initial groove along the first direction, each first initial groove forms one first groove, and the second groove is formed by parts of two second initial grooves.

Taking the orientation shown in FIG. 14 as an example, from top to bottom, it may be assumed that the electrode-piece motherboard 300 is cut along a first cutting part 350 and a fourth cutting part 350, and at this time, a first first initial groove 330 and a first second initial groove 340 can remain intact on the first electrode piece, and their structures can continue to refer to FIGs. 2 and 3.

When cutting the electrode-piece motherboard 300 along a second cutting part 350 and a fifth cutting part 350, the first first initial groove 330 is completely retained in a first electrode piece 100, part of the first second initial groove 340 is retained in the first electrode piece 100, and part of a second second initial groove 340 is also retained in the first electrode piece 100, to form the structure shown in FIGs. 4 and 5.

When cutting along a third cutting part 350 and a sixth cutting part 350, the first first initial groove 330 is retained in the first electrode piece 100, and the second second initial groove 340 is retained in the first electrode piece 100, to form the structure shown in FIGs. 6 and 7.

The electrode piece prepared by the above preparation method in the embodiment can ensure that the first groove or the second groove of the formed electrode piece 100 runs through the electrode piece along the first direction, and there is no need to carry out a secondary punching process of the electrode piece 100 as in related technologies, simplifying the preparation process of the electrode piece.

At the same time, burrs can be prevented from being formed on the second groove to avoid the burrs from puncturing the separator of the battery, thereby reducing the risk of the occurrence of the short circuit in the battery, and improving the safety performance of the battery; and at the same time, the electrode piece can also be prevented from being broken, thereby increasing the yield of the electrode piece, and thus increasing the yield of the battery.

After considering the specification and practicing the present application disclosed here, it will be easy for those skilled in the field to think of other embodiments of the present application. The present application aims to cover any variations, uses or adaptations of the present application. These variations, uses or adaptations follow the general principles of the present application and include well-known common sense or commonly used technical means in the technical field not disclosed in the present application. The specification and embodiments are only deemed to be exemplary, and the true scope of the present application are indicated in the following claims.

It should be noted that the present application is not limited to the precise structure described above and shown in the accompanying drawings, and various modifications and changes can be made without departing from its scope. The scope of the present application is limited only by the appended claims.

## Claims

1. An electrode piece (100) comprising a current collector (110) and an active laye (120) arranged on a surface of the current collector; wherein
the active layer is provided with a first groove (121) and a second groove (122), and a groove bottom of the second groove is higher than a groove bottom of the first groove, and is lower than a surface of the active layer that faces away from the current collector;
the electrode piece has a first side edge (111) and a second side edge (112) that are arranged opposite each other along a first direction, and one side edge of the groove bottom of the second groove is flush with at least one of the first side edge and the second side edge and is located on at least one side of the first groove along the first direction;
the electrode piece further comprises a tab (130), wherein a welding area between the tab and the current collector is located within the first groove, and one end of the tab extends out of the electrode piece along the first direction;
wherein along a thickness direction of the electrode piece, the electrode piece and the tab have a first surface and a second surface that are arranged opposite each other, and the first surface of the tab contacts the groove bottom of the first groove;
wherein the second surface of the tab is higher than the second surface of the electrode piece;
**characterised in that**
a height difference (D1) between the second surface of the tab and the second surface of the electrode piece is 20 µm-100 µm.

2. The electrode piece according to claim 1, wherein the groove bottom of the first groove exposes the surface of the current collector.

3. The electrode piece according to claim 1, wherein one side edge of the groove bottom of the second groove is flush with the first side edge, and the second groove is located between the first groove and the first side edge;
wherein the first groove and the second groove are intercommunicated.

4. The electrode piece according to claim 1, wherein one side edge of the groove bottom of the second groove is flush with the second side edge, and the second groove is located between the first groove and the second side edge.

5. The electrode piece according to claim 4, wherein the active layer is arranged between the first groove and the second groove.

6. The electrode piece according to claim 1, wherein the second groove comprises a first sub-groove (1221) and a second sub-groove (1222);
the first sub-groove is located between the first groove and the first side edge, and is communicated with the first groove;
the second sub-groove is located between the first groove and the second side edge, and the active layer is arranged between the second sub-groove and the first groove.

7. The electrode piece according to any one of claims 1-6, wherein a length (L1) of the first groove is 10 mm-40 mm along the first direction;
a width (W) of the first groove is 9 mm-40 mm along a second direction.

8. The electrode piece according to any one of claims 1-6, wherein a length (L2) of the second groove is 1 mm-5 mm along the first direction.

9. The electrode piece according to claim 6, wherein a sum of a length of the first sub-groove and a length of the second sub-groove is 1 mm-5 mm along the first direction.

10. The electrode piece according to claim 1, wherein two surfaces of the current collector that are arranged opposite each other are both provided with the active layer, wherein the active layer located on one surface is a first active layer, the active layer located on the other surface is a second active layer, and the first active layer and the second active layer are both provided with the first groove and the second groove;
a length of the first groove on the first active layer is greater than a length of the first groove on the second active layer; and/or
a width of the first groove on the first active layer is greater than a width of the first groove on the second active layer; and/or
a length of the second groove on the first active layer is greater than a length of the second groove on the second active layer; and/or
a width of the second groove on the first active layer is greater than a width of the second groove on the second active layer.

11. A battery, **characterized by** comprising a shell and a battery cell (200) arranged within the
shell, wherein the battery cell comprises the electrode piece according to any one of claims 1-10.

12. An electric apparatus, **characterized by** comprising the battery according to claim 11.

13. A method for preparing an electrode piece (100) according to any one of claims 1-10, the method for preparing the electrode piece comprises the following steps:
providing an electrode-piece motherboard (300);
forming a plurality of grooves arranged at intervals on the electrode-piece motherboard, wherein each groove comprises a first initial groove (330) and a second initial groove (340) that are intercommunicated, and a groove bottom of the first initial groove exposes a current collector (110) of the electrode-piece motherboard, a depth of the second initial groove is less than a depth of the first initial groove;
forming a plurality of cutting parts arranged at intervals on the electrode-piece motherboard, wherein the cutting parts extend along a second direction, and the cutting parts coincide with one side edge of the second initial groove along a first direction, or the cutting parts are located between two side edges of the second initial groove along the first direction;
cutting the electrode-piece motherboard along the cutting parts to form a plurality of electrode pieces, each electrode piece comprising a first groove (121) and a second groove (122), wherein when the cutting parts coincide with one side edge of the second initial groove along the first direction, each first initial groove forms one first groove and each second initial groove forms one second groove, or, when the cutting parts are located between two side edges of the second initial groove along the first direction, each first initial groove forms one first groove, and the second groove is formed by parts of two second initial grooves.

## Patentansprüche

1. Elektrodenstück (100) mit einem Stromkollektor (110) und einer aktiven Schicht (120), die auf der Oberfläche des Stromkollektors angeordnet ist; wobei
die aktive Schicht eine erste Nut (121) und eine zweite Nut (122) aufweist und ein Nutgrund der zweiten Nut höher als ein Nutgrund der ersten Nut und niedriger als die vom Stromkollektor abgewandte Oberfläche der aktiven Schicht ist;
das Elektrodenstück eine erste Seitenkante (111) und eine zweite Seitenkante (112) aufweist, die einander in einer ersten Richtung gegenüberliegen, und eine Seitenkante des Nutgrunds der zweiten Nut bündig ist mit mindestens einer der ersten Seitenkante und der zweiten Seitenkante und auf mindestens einer Seite der ersten Nut in der ersten Richtung angeordnet ist;
das Elektrodenstück ferner einen Streifen (130) umfasst, wobei sich ein Schweißbereich zwischen dem Streifen und dem Stromkollektor innerhalb der ersten Nut befindet und ein Ende des Streifens in der ersten Richtung aus dem Elektrodenstück herausragt;
wobei das Elektrodenstück und der Streifen in Dickenrichtung des Elektrodenstücks eine erste und eine zweite Oberfläche aufweisen, die einander gegenüberliegen, und die erste Oberfläche des Streifens den Nutgrund der ersten Nut berührt;
wobei die zweite Oberfläche des Streifens höher liegt als die zweite Oberfläche des Elektrodenstücks;
**dadurch gekennzeichnet, dass** der Höhenunterschied (D1) zwischen der zweiten Oberfläche des Streifens und der zweiten Oberfläche des Elektrodenstücks 20 µm bis 100 µm beträgt.

2. Elektrodenstück nach Anspruch 1, wobei der Nutgrund der ersten Nut die Oberfläche des Stromkollektors freilegt.

3. Elektrodenstück nach Anspruch 1, wobei eine Seitenkante des Nutgrunds der zweiten Nut bündig mit der ersten Seitenkante abschließt und die zweite Nut zwischen der ersten Nut und der ersten Seitenkante angeordnet ist;
wobei die erste und die zweite Nut miteinander verbunden sind.

4. Elektrodenstück nach Anspruch 1, wobei eine Seitenkante des Nutgrundes der zweiten Nut bündig mit der zweiten Seitenkante abschließt und die zweite Nut zwischen der ersten Nut und der zweiten Seitenkante angeordnet ist.

5. Elektrodenstück nach Anspruch 4, wobei die aktive Schicht zwischen der ersten und der zweiten Nut angeordnet ist.

6. Elektrodenstück nach Anspruch 1, wobei die zweite Nut eine erste Teilnut (1221) und eine zweite Teilnut (1222) umfasst;
die erste Teilnut sich zwischen der ersten Nut und der ersten Seitenkante befindet und mit der ersten Nut in Verbindung steht;
die zweite Teilnut sich zwischen der ersten Nut und der zweiten Seitenkante befindet und die aktive Schicht zwischen der zweiten Teilnut und der ersten Nut angeordnet ist.

7. Elektrodenstück nach einem der Ansprüche 1-6, wobei eine Länge (L1) der ersten Nut in einer ersten Richtung 10 mm bis 40 mm beträgt;
eine Breite (W) der ersten Nut 9 mm bis 40 mm in einer zweiten Richtung beträgt.

8. Elektrodenstück nach einem der Ansprüche 1-6, wobei eine Länge (L2) der zweiten Nut 1 mm bis 5 mm in der ersten Richtung beträgt.

9. Elektrodenstück nach Anspruch 6, wobei eine Summe einer Länge der ersten Teilnut und einer Länge der zweiten Teilnut 1 mm bis 5 mm in der ersten Richtung beträgt.

10. Elektrodenstück nach Anspruch 1, wobei zwei einander gegenüberliegende Oberflächen des Stromkollektors jeweils mit der aktiven Schicht versehen sind, wobei die aktive Schicht auf der einen Oberfläche eine erste aktive Schicht und die aktive Schicht auf der anderen Oberfläche eine zweite aktive Schicht ist und sowohl die erste als auch die zweite aktive Schicht jeweils eine erste bzw. eine zweite Nut aufweisen;
eine Länge der ersten Nut auf der ersten aktiven Schicht größer ist als eine Länge der ersten Nut auf der zweiten aktiven Schicht; und/oder
eine Breite der ersten Nut auf der ersten aktiven Schicht größer ist als eine Breite der ersten Nut auf der zweiten aktiven Schicht; und/oder
eine Länge der zweiten Nut auf der ersten aktiven Schicht größer ist als eine Länge der zweiten Nut auf der zweiten aktiven Schicht; und/oder
eine Breite der zweiten Nut auf der ersten aktiven Schicht größer ist als eine Breite der zweiten Nut auf der zweiten aktiven Schicht.

11. Batterie, **dadurch gekennzeichnet, dass** sie ein Gehäuse und eine im Gehäuse angeordnete Batteriezelle (200) umfasst, wobei die Batteriezelle das Elektrodenstück nach einem der Ansprüche 1-10 umfasst.

12. Elektrische Vorrichtung, **dadurch gekennzeichnet, dass** sie die Batterie nach Anspruch 11 umfasst.

13. Verfahren zur Herstellung eines Elektrodenstücks (100) nach einem der Ansprüche 1-10, wobei das Verfahren zur Herstellung des Elektrodenstücks die folgenden Schritte umfasst:
Bereitstellen einer Elektrodenstück-Hauptplatine (300);
Ausbilden einer Mehrzahl von Nuten, die in Abständen auf der Elektrodenstück-Hauptplatine angeordnet sind, wobei jede Nut eine erste Anfangsnut (330) und eine zweite Anfangsnut (340) umfasst, die miteinander verbunden sind, und wobei ein Nutboden der ersten Anfangsnut einen Stromkollektor (110) der Elektrodenstück-Hauptplatine freilegt, wobei eine Tiefe der zweiten Anfangsnut geringer ist als eine Tiefe der ersten Anfangsnut;
Ausbilden einer Mehrzahl von Schnittteilen, die in Abständen auf der Elektrodenstück-Hauptplatine angeordnet sind, wobei sich die Schnittteile in einer zweiten Richtung erstrecken und die Schnittteile mit einer Seitenkante der zweiten Anfangsnut in einer ersten Richtung übereinstimmen oder die Schnittteile zwischen zwei Seitenkanten der zweiten Anfangsnut in der ersten Richtung liegen;
Schneiden der Elektrodenstück-Hauptplatine entlang der Schnittteile, um eine Mehrzahl von Elektrodenstücken auszubilden, wobei jedes Elektrodenstück eine erste Nut (121) und eine zweite Nut (122) aufweist, wobei, wenn die Schnittteile mit einer Seitenkante der zweiten Anfangsnut in der ersten Richtung übereinstimmen, jede erste Anfangsnut eine erste Nut und jede zweite Anfangsnut eine zweite Nut bildet oder, wenn die Schnittteile zwischen zwei Seitenkanten der zweiten Anfangsnut in der ersten Richtung angeordnet sind, jede erste Anfangsnut eine erste Nut bildet, und die zweite Nut aus Teilen von zwei zweiten Anfangsnuten gebildet wird.

## Revendications

1. Pièce d'électrode (100) comprenant un collecteur de courant (110) et une couche active (120) agencée sur une surface du collecteur de courant, dans laquelle
la couche active est pourvue d'une première rainure (121) et d'une deuxième rainure (122), et le fond de la deuxième rainure est plus haut que le fond de la première rainure et est plus bas que la surface de la couche active qui est opposée au collecteur de courant ;
la pièce d'électrode comporte un premier bord latéral (111) et un deuxième bord latéral (112) qui sont agencés face à face dans une première direction, et un bord latéral du fond de la deuxième rainure affleure avec au moins un bord parmi ledit premier bord latéral et ledit deuxième bord latéral et est situé sur au moins un côté de la première rainure dans la première direction ;
la pièce d'électrode comprend en outre une patte (130),
dans laquelle une zone de soudure entre la patte et le collecteur de courant est située dans la première rainure, et une extrémité de la patte s'étend hors de la pièce d'électrode dans la première direction ;
dans laquelle, en direction de l'épaisseur de la pièce d'électrode, la pièce d'électrode et la patte ont une première surface et une deuxième surface agencées face à face, et la première surface de la patte est en contact avec le fond de la première rainure ;
dans laquelle la deuxième surface de la patte est plus haute que la deuxième surface de la pièce d'électrode ;
**caractérisée en ce que** la différence de hauteur (D1) entre la deuxième surface de la patte et la deuxième surface de la pièce d'électrode est de 20 µm à 100 µm.

2. Pièce d'électrode selon la revendication 1, dans laquelle le fond de la première rainure expose la surface du collecteur de courant.

3. Pièce d'électrode selon la revendication 1,
dans laquelle un bord latéral du fond de la deuxième rainure affleure avec le premier bord latéral, et la deuxième rainure est située entre la première rainure et le premier bord latéral ;
dans laquelle la première rainure et la deuxième rainure communiquent entre elles.

4. Pièce d'électrode selon la revendication 1, dans laquelle un bord latéral du fond de la deuxième rainure affleure avec le deuxième bord latéral, et la deuxième rainure est située entre la première rainure et le deuxième bord latéral.

5. Pièce d'électrode selon la revendication 4, dans laquelle la couche active est agencée entre la première rainure et la deuxième rainure.

6. Pièce d'électrode selon la revendication 1, dans laquelle
la deuxième rainure comprend une première sous-rainure (1221) et une deuxième sous-rainure (1222) ;
la première sous-rainure est située entre la première rainure et le premier bord latéral, et communique avec la première rainure ;
la deuxième sous-rainure est située entre la première rainure et le deuxième bord latéral, et la couche active est agencée entre la deuxième sous-rainure et la première rainure.

7. Pièce d'électrode selon l'une quelconque des revendications 1 à 6, dans laquelle
la longueur (L1) de la première rainure est de 10 mm à 40 mm dans la première direction ;
la largeur (W) de la première rainure est de 9 mm à 40 mm dans une deuxième direction.

8. Pièce d'électrode selon l'une quelconque des revendications 1 à 6, dans laquelle la longueur (L2) de la deuxième rainure est de 1 mm à 5 mm dans la première direction.

9. Pièce d'électrode selon la revendication 6, dans laquelle la somme de la longueur de la première sous-rainure et de la longueur de la deuxième sous-rainure est de 1 mm à 5 mm dans la première direction.

10. Pièce d'électrode selon la revendication 1, dans laquelle
les deux surfaces du collecteur de courant agencées face à face sont toutes deux pourvues de la couche active, dans laquelle la couche active située sur une surface est une première couche active, la couche active située sur l'autre surface est une deuxième couche active, et la première couche active et la deuxième couche active sont toutes deux pourvues de la première rainure et de la deuxième rainure ;
la longueur de la première rainure sur la première couche active est supérieure à la longueur de la première rainure sur la deuxième couche active ; et/ou
la largeur de la première rainure sur la première couche active est supérieure à la largeur de la première rainure sur la deuxième couche active ; et/ou
la longueur de la deuxième rainure sur la première couche active est supérieure à la longueur de la deuxième rainure sur la deuxième couche active ; et/ou
la largeur de la deuxième rainure sur la première couche active est supérieure à la largeur de la deuxième rainure sur la deuxième couche active.

11. Batterie **caractérisée en ce qu'**elle comprend une enveloppe et une cellule de batterie (200) agencée à l'intérieur de l'enveloppe, dans laquelle la cellule de batterie comprend la pièce d'électrode selon l'une quelconque des revendications 1 à 10.

12. Appareil électrique, **caractérisé en ce qu'**il comprend la batterie selon la revendication 11.

13. Procédé de préparation d'une pièce d'électrode (100) selon l'une quelconque des revendications 1 à 10, dans lequel le procédé de préparation de la pièce d'électrode comprend les étapes suivantes :
fourniture d'une carte mère de pièce d'électrode (300) ;
formation d'une pluralité de rainures agencées à intervalles sur la carte mère de pièce d'électrode, dans lequel chaque rainure comprend une première rainure initiale (330) et une deuxième rainure initiale (340) qui communiquent entre elles, le fond de la première rainure initiale expose un collecteur de courant (110) de la carte mère de pièce d'électrode, et la profondeur de la deuxième rainure initiale est inférieure à la profondeur de la première rainure initiale ;
formation d'une pluralité de parties de coupe agencées à intervalles sur la carte mère de pièce d'électrode, dans lequel les parties de coupe s'étendent dans une deuxième direction, et les parties de coupe coïncident avec un bord latéral de la deuxième rainure initiale dans une première direction, ou les parties de coupe sont situées entre deux bords latéraux de la deuxième rainure initiale dans la première direction ;
découpe de la carte mère de pièce d'électrode le long des parties de coupe pour former une pluralité de pièces d'électrode, chaque pièce d'électrode comprenant une première rainure (121) et une deuxième rainure (122), dans lequel, quand les parties de coupe coïncident avec un bord latéral de la deuxième rainure initiale dans la première direction, chaque première rainure initiale forme une première rainure et chaque deuxième rainure initiale forme une deuxième rainure, ou, quand les parties de coupe sont situées entre deux bords latéraux de la deuxième rainure initiale dans la première direction,
chaque première rainure initiale forme une première rainure, et la deuxième rainure est formée par des parties de deux deuxièmes rainures initiales.
